# EUROPEAN PATENT SPECIFICATION

(11) **EP 4 400 413 B1**
(45) Date of publication and mention of the grant of the patent: **13.08.2025**
(21) Application number: 23382016.6
(22) Date of filing: 12.01.2023
(51) Int. Cl.: B64C 3/28, B64C 21/06, B25B 11/00, B64F 5/10, B64F 5/50

(54) **METHOD OF HANDLING A MICROPERFORATED LEADING EDGE SKIN, PORTABLE INSTALLATION TOOL FOR POSITIONING A SKIN ON A LEADING EDGE, AND ASSEMBLY PROCESS FOR INSTALLING A MICROPERFORATED SKIN ON A LEADING EDGE USING SAID TOOL**
VERFAHREN ZUR HANDHABUNG EINER MIKROPERFORIERTEN VORDERKANTENHAUT, TRAGBARES MONTAGEWERKZEUG ZUR POSITIONIERUNG EINER HAUT AUF EINER VORDERKANTE UND MONTAGEVERFAHREN ZUR MONTAGE EINER MIKROPERFORIERTEN HAUT AUF EINER LEITKANTE UNTER VERWENDUNG DIESES WERKZEUGS
MÉTHODE DE MANIPULATION D'UNE PEAU MICROPERFORÉE DE BORD D'ATTAQUE, OUTIL D'INSTALLATION PORTABLE POUR POSITIONNER UNE PEAU SUR UN BORD D'ATTAQUE, ET PROCÉDÉ D'ASSEMBLAGE POUR INSTALLER UNE PEAU MICROPERFORÉE SUR UN BORD D'ATTAQUE À L'AIDE DE CET OUTIL

(43) Date of publication of application: 17.07.2024
(60) Divisional application: 25185256.2
(73) Proprietor: Aernnova Aerospace, 01510 Miñano (ES); Deutsches Zentrum für Luft- und Raumfahrt e.V., 53227 Bonn-Oberkassel (DE)
(72) Inventor: Cruz Palacios, David, 28034 Madrid (ES); Martin de la Escalera, Federico, 28034 Madrid (ES); Castillo Acero, Miguel Angel, 45200 Illescas (ES); Kleineberg, Markus, 30966 Hemmingen (DE); Herrmann, Ulrich, 38108 Braunschweig (DE)
(74) Representative: Clarke, Modet y Cía., S.L.

(56) References cited:
- EP-A1- 1 849 634
- DE-A1- 102016 109 026
- DE-U1- 202013 105 260
- GB-A- 2 586 053
- US-A1- 2017 197 706
- US-A1- 2017 327 202
- US-A1- 2021 155 352

## Description

### TECHNICAL FIELD OF THE INVENTION

The present invention is included in the field of aircraft structures, and also in that of the aerodynamic surfaces designed for laminar flow.

The field of application of the present invention is that of aerodynamic surfaces equipped with an outer skin microperforated for active laminar flow control. This type of surfaces are mainly used for leading edges of wing-type elements (wing, stabilizers...), although it could be also applied to any other component where achieving laminar flow by suctioning the boundary layer could lead to a reduction of the aerodynamic drag. This could be also applicable to other industries where the drag reduction is beneficial, such are trains, automotive or other.

In particular, the invention is of great interest for the design of leading edges of wing-type elements on aircrafts that include the aforementioned suction system for laminar flow control.

### BACKGROUND OF THE INVENTION

Achieving laminar flow over aircraft aerodynamic surfaces has been a goal for many decades because, in general, laminar flow over an aerodynamic surface result in reduced drag compared to turbulent flow over the same surface. There are two strategies that may be applied, which are natural laminar flow and active laminar flow control.

Natural laminar flow is produced by shaping the aerodynamic surfaces in a manner such that laminar flow naturally occurs and is maintained along the extent of the aerodynamic surface during all or during targeted flight conditions. However, shaping certain aerodynamic surfaces to achieve natural laminar flow is not practical.

Active laminar flow control involves modifying the air flow over an aerodynamic surface so that laminar flow, which occurs over the leading edge, is maintained over the extent of the surface by preventing a turbulent flow trip. One way to achieve this is by continuously removing low energy air from the boundary layer along the extent of the flow surface to prevent the boundary from thickening and eventually tripping to turbulent flow. This can be achieved by using many small holes closely spaced and generally evenly distributed along and across the flow surface with suction to pull air from the boundary layer into the holes in a generally continuous way.

The external skin of a leading edge designed for active laminar flow involves the drilling of thousands of tiny holes, closely and periodically spaced, across the leading edge surface. This usually involves the use of a very thin outer skin, which is non-structural and has only an aerodynamic purpose, assembled on the main structural subset of the aircraft component where it is located (usually, the leading edge of a wing-type component).

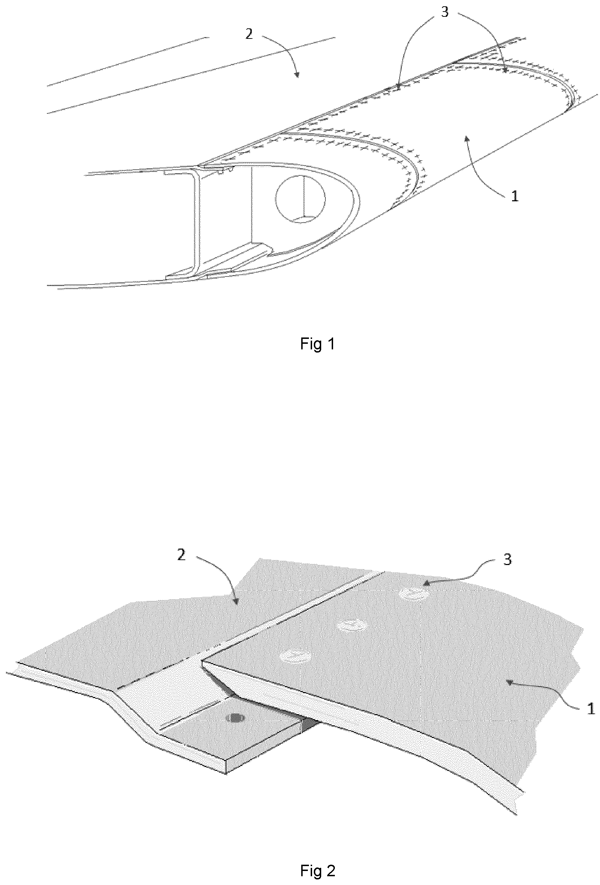

Below the outer microperforated skin the suction chamber (sometimes, several separated chambers) is located, where the air of the boundary layer is suctioned. This suction chamber is constructed by attaching the outer microperforated skin over the main structural element, and by adding a series of spacers between them, which usually act also as stiffeners for the very thin outer skin (Fig 1). These stiffeners may have different section shapes, such as "omega" (or "hat"), "L", "C", "Z" or others.

Leading edges of aircraft wing-type components are usually removable elements attached to the main structure of the wing or stabilizer by means of non-permanent fasteners (usually screws or bolts) for maintenance reasons. These fasteners are potential sources of aerodynamic drag, if the fastener head is not perfectly aligned with the aerodynamic surface, as usually occurs due to manufacturing and installation tolerances. In particular, the leading edge areas are of extreme importance in terms of aerodynamic smoothness if a laminar flow is desired, thus making extreme the importance of the smoothness in the area.

To achieve the desired smoothness in the area, labour intensive operations are usually done where the fasteners are installed, by applying sealant on the potential voids around the fasteners head to achieve a smooth surface, or similar operations. In removable joints such are those of leading edges, this time consuming operation has to be repeated every time the part is removed for maintenance.

In addition to this problem with fasteners, laminar flow leading edges which include the aforementioned microperforated skin have another problem: the sensibility of this outer skin to dirt, dust or similar, that may cover the tiny microholes used for boundary layer suction, thus making the device inoperative if a significant part of these holes are affected by those depositions. In addition to this, this outer, ultra-thin, microperforated skin is also very sensitive to potential damage by accidental hits during operations on ground, or by hail impacts or similar, which usually lead to frequent repairs. There is a need, thus, to frequently remove this outer skin for cleaning the microholes area or to repair or replace a damaged skin.

This maintenance of the outer microperforated skin usually requires the removal of the entire leading edge component first, leading to the aforementioned problem with the fasteners attaching the leading edge to the fixed structure and the need to smooth their surface. Moreover, two disassembly-assembly operations are usually needed, the first to remove the leading edge from the structure, and the second one to remove the microperforated skin from the leading edge component.

To avoid having to disassemble the whole component, a removable outer skin may be devised, attaching it to the leading edge component through a second group of non-permanent fasteners (different from those joining the leading edge to the fixed structure). However, this is only a partial solution that still maintains the need to smooth the heads of those fasteners every time they are installed.

The purpose of this invention is to solve many of those exposed problems by devising a removable microperforated outer skin without the presence of fasteners on the aerodynamic surface, and by also hiding the fasteners joining the leading edge components to the fixed structure of the aircraft.

The handling and assembly of this outer microperforated skin is also a cumbersome process. Because of the very low thickness that is typical of this type of parts (tipically in the range of tenths of millimeter), the skin has a high flexibility that difficults its handling. Although the inclusion of stiffeners improves somehow this behavior, the skin still maintains a low rigidity in the direction normal to those stiffeners, making difficult its manipulation and assembly. This problem is even worse in the case of the skin of the invention, designed to be easily removable for maintenance during the operational life of the aircraft: its handling and operations of assembly and disassembly must be as easy as possible in an environment not so well equipped as an aircraft assembly plant.

The handling problem could be alleviated with the use of a temporary rig or some type of auxiliary frame that could be attached to the skin on its outer face, but the problem is how to attach that rig to the microperforated skin.

Rigs equipped with vacuum cups are well known solutions for handling large, thin and flexible parts for aeronautical assemblies and in other industries. However, in this case the existence of a multitude of microholes in the skin makes the use of vacuum cups difficult. Conventional vacuum equipment used for similar tasks do not work because of the vacuum loses due to the microholes in the skin. Although there exist vacuum equipment designed for manipulation of porous parts by using a high vacuum power, which maintains the parts attached to the vacuum cups despite the losses, the use of high vacuum is risky when handling thin and delicate parts as these skins, which usually have thickness in the order of tenths of millimeter. The need of this type of special equipment is also costly and not usually available in current aeronautical assembly facilities, not to say in maintenance facilities.

Anyway, the installation of the skin on a rig prior to its installation on the receiving structure is just a first step to facilitate the assembly process, but there is still a cumbersome and time consuming process to carry out before attaching the skin to the structure: carefully adjusting the position of the skin over the receiving structure to keep the gaps between the skin and the adjacent elements in the required values to guarantee a good laminar flow.

The use of coordination holes between the rig holding the skin and the supporting structure is a good alternative to this time consuming adjustment process, and it is a well known process applied in aeronautical assemblies and other industries. By including coordination holes both in the microperforated skin and the receiving structure and adding pins to the rig also coordinated with this coordination holes, it is possible to install easily and quickly the skin on the receiving structure in its right place, maintaining the adequate gaps with the adjacent parts of the structure without the need of time consuming adjustments.

However, this is still a delicate and time consuming process, because the set of skin plus rig is usually a heavy set that has to be handled by several people or even with the help of cranes, and its approach to the receiving structure is delicate, because of the risk of hitting and damaging it. The use of the rig solves, thus, the problem of the flexibility of the skin, but adds the problem of the weight and volume, making still difficult and time consuming the assembly of the skin even with the help of the coordination holes.

Document DE102016109026A1 discloses an aerodynamic profile body for flying objects, having a flow surface around which a surrounding air flow can flow and is designed in an intake region for sucking in the air flow flowing around the flow surface for active flow control. The profile body has an inner support structure and an outer layer, wherein between the support structure and the outer layer negative pressure chambers are arranged, which extend across the span and are located transversely to the flow direction of the air flow flowing around the flow surface.

Document US2017/327202A1 discloses an aircraft joint between overlapping first and second components including a fastener with a head and shank, and a fastener retainer fixedly attached to the second component at the overlap region. The fastener retainer has a recess and a through hole. The fastener head is situated in the recess and between the fastener retainer and the second component. The fastener shank extends through the hole in the fastener retainer and into the first component to fasten the first component to the second component. The joint may be between an aircraft wing cover and a wing panel.

Document US2017/197706A1 discloses a leading edge section with laminar flow control including: a perforated outer skin, a perforated inner skin, and a plurality of suction chambers formed between the outer skin and the inner skin. The leading edge section includes a plurality of stringers span-wise arranged at the leading edge section, and integrally formed with the outer skin, such that the inner skin is joined to the stringers. It also discloses a method for manufacturing a leading edge section integrating a laminar flow control system, wherein a perforated inner skin is joined with a perforated outer skin having a plurality of stringers integrally formed with the outer skin, such that suction chambers are defined by a part of the outer sking, a part of the inner skin and a pair of stringers.

Document GB2586053A discloses an aircraft wing with laminar flow control system and Krueger flap, in which an aircraft wing comprises a laminar flow control system comprising a conduit drawing air from a leading edge exterior surface and structurally supporting Krueger flap weight. Preferably the conduit comprises an outer duct concentrically surrounding an inner duct, the outer duct providing cold exterior air, insulating the inner duct providing hot air for wing skin ice protection. It also discloses a method of at least partially shielding perforations in an aircraft wing leading edge region from debris, wherein an aerodynamic surface moves to change airflow path over the wing.

Document US2021/155352A1 discloses as method for manufacturing a leading edge comprising a structure and at least one outer wall, the method comprising a step of mounting the structure and an assembly step to link the structure and the outer wall during which the outer wall is held pressed against a conformation surface having a profile identical to a theoretical outer surface configured to limit aerodynamic disturbances.

Document DE202013105260U1 discloses a suction device having an electrostatic flexible film; an attachment element permanently attached to the film; and a holding element which has a T-shaped recess and an outwardly projecting holding element. In response to the adhesion of the film to a smooth surface, a negative pressure is created between them by pressing the film onto the surface, and the recess can be pushed onto the attachment element.

Document EP1849634A1 discloses a device and method for installing a vehicle window in which a carrier frame is fitted with suckers that can be placed on segments of a motor vehicle's bodywork on both sides of window sections so as to fix the carrier frame on a motor vehicle. On the carrier frame there is also a mounting frame with more suckers that have an adjustable position for fixing a vehicle window. It also discloses a method for fitting a vehicle's window in a motor vehicle's window section.

There is a need for an easily removable microperforated skin that minimizes the labour intensive operations of smoothing the heads of the fasteners attaching it to the structure, and for an assembly process and tools that ease the microperforated skin handling and assembly, taking into account that they should be used in the operational environment of a maintenance facility, not an assembly plant.

The development of a removable outer microperforated skin without visible fasteners, and the development of the tools and process to remove and reinstall it in the context of maintenance operations is the purpose of this invention.

In this respect, the invention as defined in the present claims provides a method for handling a microperforated skin for a leading edge of an aircraft according to claim 1, a portable installation tool for positioning a skin on a leading edge of an aircraft according to claim 2, and an assembly process for installing a microperforated skin on a leading edge according to claim 6 using the tool of any of claims 2-5. Preferred embodiments of the claimed invention are defined in the respective dependent claims.

### BRIEF DESCRIPTION OF DRAWINGS

Present specification is complemented with a set of drawings, illustrative of the preferred example and never limiting the invention.
Fig 1 shows the state of the art for joining a removable aerodynamic part to a fixed structure
Fig 2 shows a detail of the conventional joint with fasteners between aerodynamic surfaces
Fig 3 shows a section of the configuration of the invention, with the fasteners of the joint hidden below the outer microperforated skin.
Fig 4 is a global view of the configuration of the invention, with the access in the lower area to access the fasteners joining the removable skin to the main structure
Fig 5 is a sketch of the configuration of the invention including a leading edge flap (Krüger flap)
Fig 6 is a view of a typical leading edge with a Krüger flap deployed, showing the access from below to the internal structure
Fig 7 is a detail of the outer microperforated skin before and after adapting itself elastically to the receiving structure
Fig 8 shows a microperforated sheet covered with an electrostatic plastic film
Fig 9 shows a proof of concept of holding a microperforated sheet with vacuum cups after applying an electrostatic plastic film on it
Fig 10 shows both parts (fixed and rotating) of the assembly tooling for the skin, separated
Fig 11 is a top view of the assembly tooling for the skin after joining both parts of the tool through its hinge
Fig 12 is a sketch showing the installation of the first part of the tool on the structure
Fig 13 is a sketch showing the attachment of the second part of the tool to the first part through the hinge, and the attachment of the microperforated skin to the vacuum cups
Fig 14 shows the sequence of rotation until the skin is positioned in its final place on the structure
Fig 15 is a view of a leading edge representative of the invention with the assembly tooling for the microperforated skin in the final step of the assembly, prior to the removal of the tool

### DESCRIPTION OF THE INVENTION

The present invention involves a new structural design for vehicle parts (usually aircrafts, although may be applicable also to other high-speed vehicles affected by aerodynamics) that includes an outer microperforated skin for active laminar flow control by suction of the boundary layer. The invention is mainly characterized by the possibility of easily disassembling the outer skin for maintenance, and by the minimization or absence of fasteners appearing on the outer surface of the component. The presently claimed invention generally relates to the process for handling and installing this removable skin during the maintenance operations.

In particular, the invention is of great interest for the design of leading edges of wing-type elements on aircrafts that include the aforementioned suction system for laminar flow control. It could be also applicable to other elements such are leading edges of engine nacelles, aerodynamic fairings, etc.

When joining a removable part (1) such as a leading edge or a fairing to the receiving structure (2), usually the removable part is attached by means of screws (3) distributed around its perimeter (Fig 1, Fig 2). Every time these screws are assembled, they have to be later covered with aerodynamic sealant and paint to achieve a uniform and smooth aerodynamic surface, in order to reduce drag and to enable laminar flow downstream of their location.

The purpose is to eliminate or at least to minimize the number of fasteners (3) appearing on the aerodynamic surface to join those parts to the receiving structure, and also to include the possibility of disassembling only the outer skin for maintenance without having to remove the entire leading edge section.

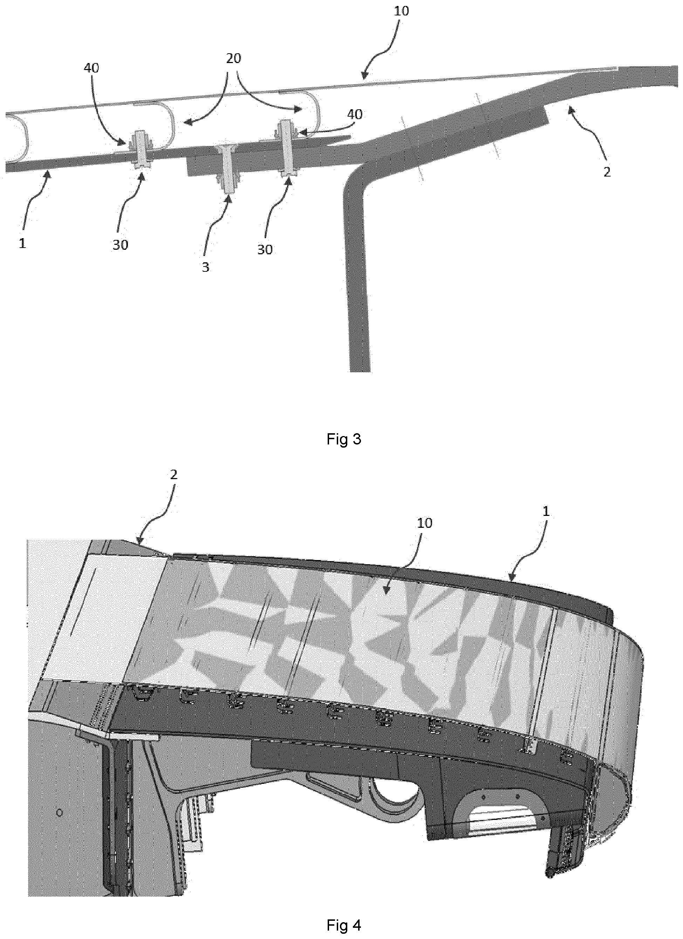

This is achieved by the inclusion of an outer microperforated skin (10) that includes a series of associated stiffeners (20) which also act as spacers for the formation of the suction chamber, and in some embodiments of the invention with receiving attachments such as anchor nuts (40) installed on them (Fig 3). The stiffeners, that may have a cross section of different shapes (usually "omega", "C" or "Z") are preferably adhesively bonded to the outer skin, although other joining methods may be used depending on their material: welding could be used if both parts, skin and stiffeners, are made of metal (although welding could easily cause deformations on the thin outer skin), co-curing could be used if both parts are made of composite materials, or any other joining method. Also, it could be manufactured as an integral part with both skin and stiffeners forming a single part.

This subassembly (or integral part) of outer skin with stiffeners is joined to the main structure of the leading edge by means of non-permanent fasteners (30) (screws or similar) that join the stiffeners to the leading edge (1). These fasteners are installed from below, from inside the leading edge section, and are accessible through an open cavity on the intrados (lower skin) of the leading edge (Fig 4), and attach to the anchor nuts (40) of the stiffeners (20). Alternatively, expandable fasteners or similar may be installed that do not need anchor nuts.

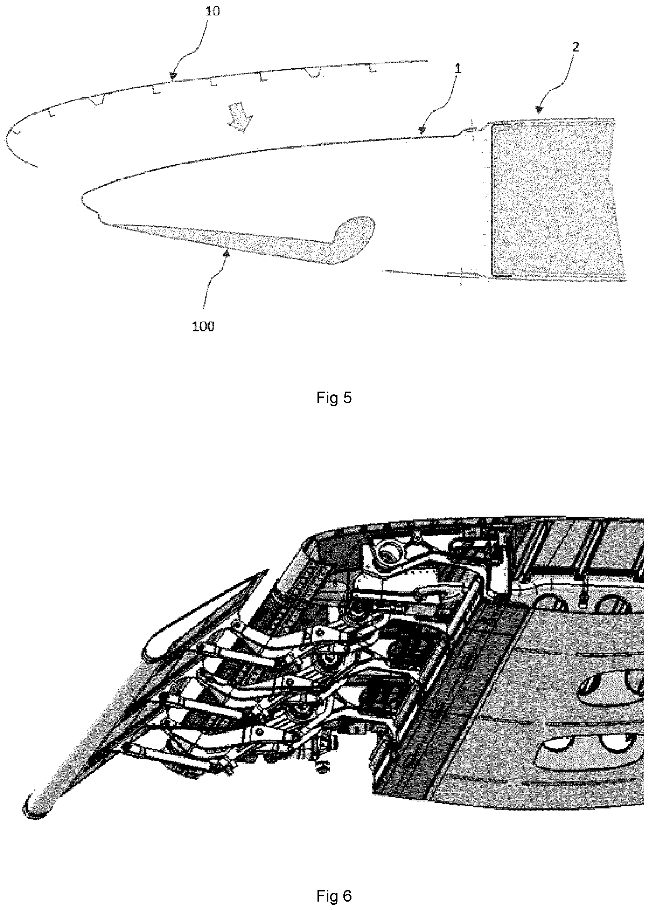

The access in the lower area of the leading edge may be the hole occupied by a Krüger flap (100) when the flap is deployed or disassembled (Fig 5, Fig 6); or it may be achieved by including removable access panels in the lower skin of the leading edge. Since the intrados is an area of high pressure, there is no problem in having removable panels with visible fasteners in this area from a laminar flow point of view.

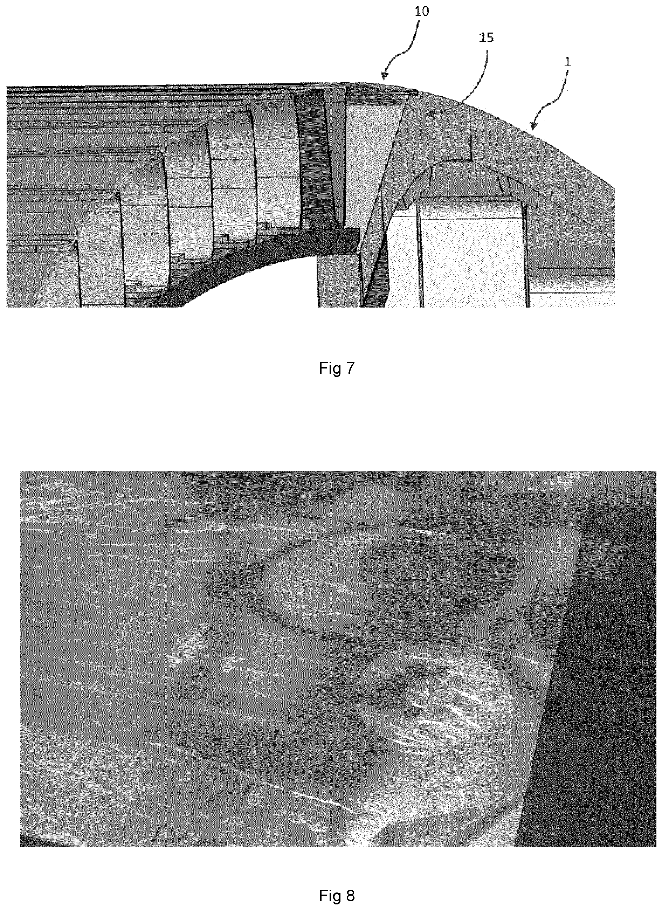

As seen on Fig 3, to minimize steps and ensure smoothness on the aerodynamic surface, the rear border of the outer microperforated skin (10) rests directly on the fixed structure of the aircraft (2). To avoid the need to install fasteners in this area (which could not be installed from below, because of lack of access, and thus would have to be installed from outside, what is undesirable as already mentioned), the outer skin is previously bent in a shape that would cause interference with the fixed structure in this area when installed (Fig 7, item 15). This causes the skin to be elastically forced in this zone during its installation, guaranteeing that it will remain resting on the fixed structure because of the tension to which it is subjected (Fig 7).

On the other part, the assembly of the main leading edge structure (1) to the fixed structure (2) of the aircraft is made in a conventional way through non-permanent fasteners (3) that are now covered by the removable microperforated skin (10) (Fig 3). This way, the main structural fasteners attaching the leading edge to the fixed structure are removed from the critical aerodynamic surface, eliminating the need to smooth their heads with sealants or equivalent operations.

The product described above solves many of the problems related to the maintenance and repair of the outer microperforated skin, but a new process has to be developed for the handling and assembly of this skin in order to minimize the time and labour costs associated to that maintenance task, and to perform it in aircraft maintenance facilities with portable tools.

Although the problem of the flexibility of the skin may be solved by attaching it to an auxiliary rig or frame that could make use of vacuum cups to hold the skin, the new problem is how to hold with vacuum cups a porous part without using special high power equipment, which is undesirable as explained in the background section. A first solution found to avoid this problem is to temporarily cover the microperforated skin with a thin adhesive film that makes the part airtight and thus able to be handled with conventional vacuum cups of low suction power. However, the use of an adhesive film is cumbersome, since it is sometimes difficult to be removed and, more important, it could also leave some residue on the surface of the part. This is especially worrying in a microperforated part, where the adhesive residue could clog the tiny microholes, ruining the effectiveness of the laminar flow system.

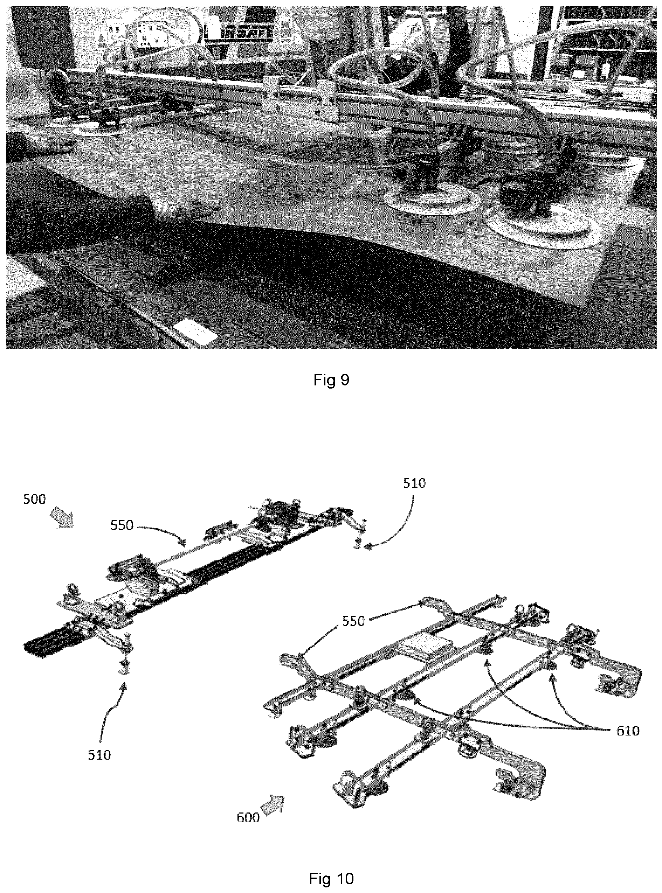

After many trials it was found, however, that by using a plastic film that adheres to the skin surface by means of electrostatic charge (Fig 8) is enough to guarantee the airtightness of the skin while allowing it to be handled by means of conventional vacuum cups. The use of electrostatic vinyl or similar electrostatic plastic films is thus the preferred solution to handle the removable microperforated skin installed on a rig by means of vacuum cups (Fig 9).

The next problem to be solved is how to position the set skin-rig on the receiving structure in an effective and risk-free way, minimizing the installation time and the risk of impacts against the structure, and also using non-permanent (portable) tools in the environment of an aircraft maintenance facility.

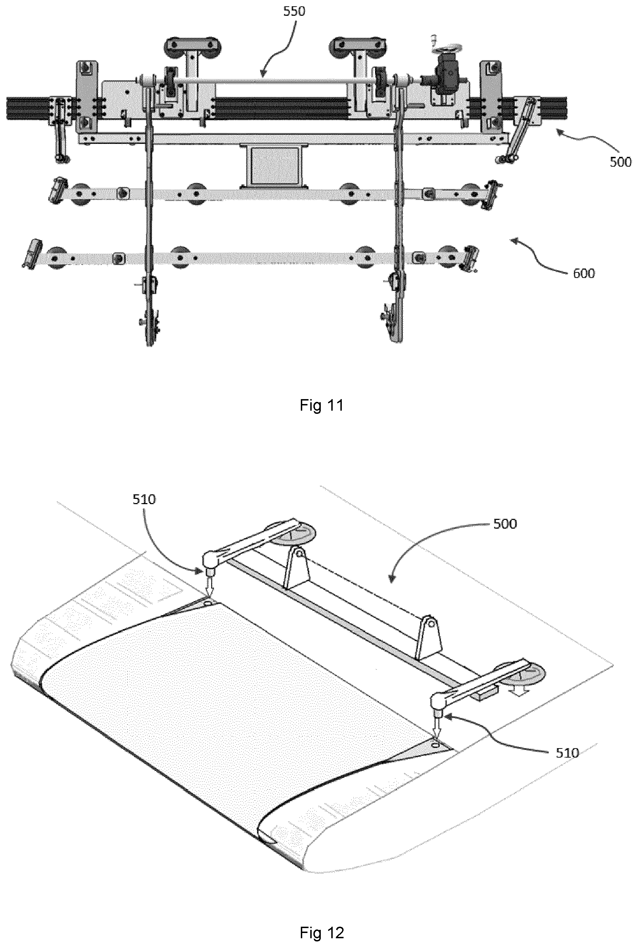

This is achieved by developing a new articulated tool composed by two parts joined through a hinge (Fig 10, Fig 11). The first part of the tool (500), which will be called the fixed part of the tool because it does not rotates around the hinge, includes the pins (510) to locate the tool on the receiving structure of the aircraft through at least a couple of tooling holes in that structure, although other equivalent positioning devices could be used. The second part of the tool (600) is the rig with the vacuum cups (610) holding the skin. This second part (600) is joined to the first part (500) of the tool through the hinge (550).

This way, the skin installation is made in several steps: first (Fig 12), the fixed part of the tool (500) is positioned on the receiving structure through the pins (510) in the tool and the corresponding tooling holes in the structure. Since this fixed part of the tool is smaller and lighter than the rig with vacuum cups holding the skin, its installation on the structure of the aircraft may be done in an efficient and risk-free manner. Although the use of pins in the tool and corresponding tooling holes in the structure of the aircraft is a preferred solution for the location of the fixed part of the tool (500), any other positioning system (slots, part contours...) could be used.

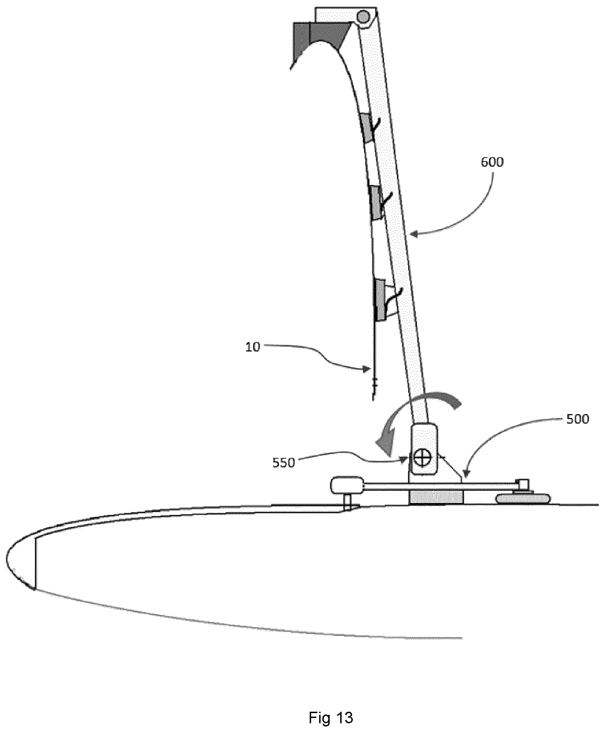

Next (Fig 13), the second part of the tool (600), composed by the rig with the vacuum cups to hold the skin, is attached to the hinge (550) of the fixed part (500) of the tool in a vertical position, rotated in relation to its final position on the structure. Then, the skin (10) is attached to the rig with the vacuum cups and located on it through coordination holes, or by controlling its perimeter, or by a combination of both. Since the rig is rotated in a vertical position, the flexible skin is easier to manipulate in that position, while maintained tense by its own weight.

Alternatively to the sequence presented above, the skin (10) could be positioned on the rig and holded by the vacuum cups prior to the attachment of the rig (600) to the fixed part (500) of the tool.

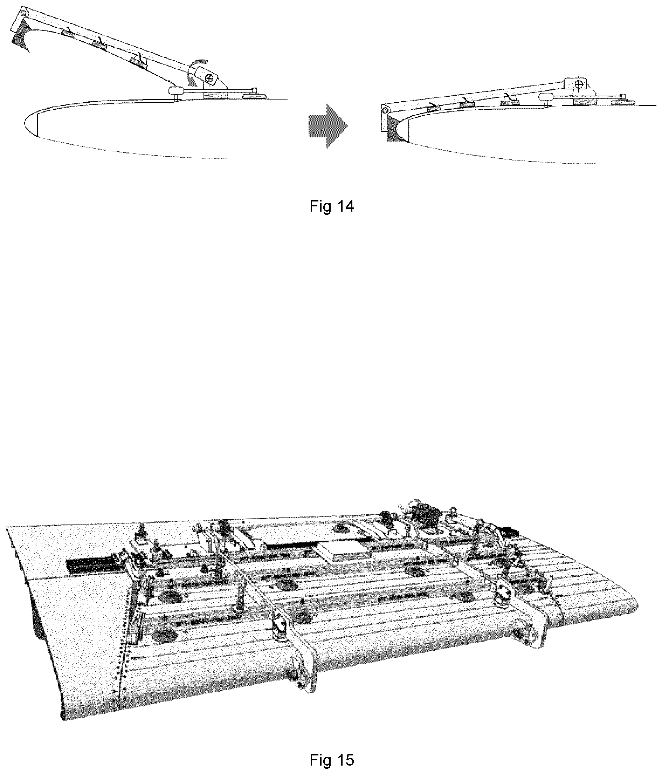

Finally, the rig holding the skin rotates around the hinge until the skin rests on the receiving structure of the aircraft in its final position. (Fig 14, Fig 15)

Once the skin is already positioned in its right place thanks to the tool and operations previously described, it is attached to the main structure of the leading edge (1) by installing a series of fasteners (30) attaching to the stiffeners (20) associated to the skin (10) (Fig 3). Once the skin is secured to the receiving structure, the first (500) and second (600) parts of the assembly tooling used to handle and position the skin may be removed.

The reverse sequence may be used for an easy disassembly of the microperforated skin.

### DETAILED DESCRIPTION OF PARTICULAR EMBODIMENTS OF THE INVENTION

The previous paragraphs may be implemented with multiple variations in terms of product, assembly process and assembly tool.

The microperforated skin (10) with its associated stiffeners (20) can be a single, integral part.

Although usually the microperforated skin (10) is manufactured in titanium, there is no limitation from the point of view of this invention to the material used for the manufacturing of the skin (10), the stiffeners (20) or both of them when manufactured in an integral part. Metallic, composite or plastic materials could be considered.

In Fig. 3 the attachment of the stiffeners (20) to the receiving structure (1) is made by using non-permanent fasteners (30) that attach to anchor nuts (40) previously installed on the stiffeners (20).

In other cases, the use of anchor nuts pre-installed on the stiffeners is not required by using blind fasteners (expandable or some other type of fastener not requiring a receiving attachment device, such as a nut).

In a preferred embodiment of the invention (Fig 12), the fixed part (500) of the assembly tool is located on the receiving structure through a couple of pins (510) in the tool and corresponding tooling holes located in the aircraft structure. In this preferred embodiment, once positioned the tool on the structure, it is secured by means of auxiliary vacuum cups included in the tool that act on the aircraft structure.

In another embodiment of the invention, the rig (600) holding the skin is equipped with pressure sensors (load cells) to detect any deformation or stress induced to the skin (10) during the assembly process.

In another embodiment of the invention, one or both parts of the tools (500, 600) used for the installation of the skin are equipped with profilometers to check that the skin is being installed maintaining the required gaps with the adjacent parts of the structure.

## Claims

1. A method for handling a microperforated skin for a leading edge of an aircraft with a rig equipped with vacuum cups, comprising the step of covering the microperforated skin with an electrostatic film for airtightness.

2. A portable installation tool for positioning a skin on a leading edge of an aircraft, comprising
• A first part (500), comprising positioning elements for being coordinated with corresponding positioning references in the aircraft structure,
• a second part (600), comprising vacuum cups for holding the skin and positioning references for positioning the skin on this second part of the tool, and
• a common hinge (550) allowing the first and second parts of the tool to be joined together and also allowing the rotation of the second part around the first part.

3. The portable installation tool according to claim 2 where the first part of the tool comprises vacuum cups to fix this first part of the tool on the structure of the aircraft.

4. The portable installation tool according to any of the claims 2 or 3 where the second part of the tool comprises pressure sensors to detect any deformation or stress induced to the skin during the assembly process.

5. The portable installation tool according to any of the claims 2 to 4 where the portable installation tool comprises profilometers to check the right positioning of the skin on the supporting structure.

6. An assembly process for installing a microperforated skin on a leading edge using the tool according to any of the claims 2 to 5, comprising the following steps:
• Covering the microperforated skin with an electrostatic film for airtightness,
• positioning the microperforated skin covered with the electrostatic film on the second part of the installation tool (600) and keeping the skin attached to this second part of the tool by means of vacuum cups,
• positioning the first part of the installation tool (500) on the aircraft structure by means of positioning elements in the tool coordinated with references in the aircraft structure,
• joining the first and second parts of the tool together through the common hinge (550),
• rotating the second part of the tool with the skin attached to it around the hinge until the skin rests on the receiving structure of the leading edge,
• fastening the skin to the leading edge structure, and
• removing the first and second parts of the installation tool.

## Patentansprüche

1. Verfahren zur Handhabung einer mikroperforierten Außenhaut für eine Vorderkante eines Flugzeugs unter Verwendung einer mit Vakuumsaugern ausgestatteten Vorrichtung, umfassend den Schritt des Abdeckens der mikroperforierten Außenhaut mit einer elektrostatisch geladenen Folie zwecks Luftdichtheit.

2. Tragbares Montagewerkzeug zur Positionierung einer Außenhaut auf einer Vorderkante eines Flugzeugs, umfassend
• einen ersten Teil (500), der Positionierelemente umfasst, die mit entsprechenden Positionierreferenzmerkmalen in der Flugzeugstruktur übereinstimmen müssen,
• einen zweiten Teil (600), der Vakuumsauger zum Halten der Außenhaut und Positionierreferenzmerkmalen zur Positionierung der Außenhaut auf diesem zweiten Teil des Werkzeugs umfasst, und
• ein gemeinsames Scharnier (550), das das Verbinden des ersten und des zweiten Teils des Werkzeugs sowie die Drehung des zweiten Teils um den ersten Teil ermöglicht.

3. Tragbares Montagewerkzeug nach Anspruch 2, wobei der erste Teil des Werkzeugs Vakuumsauger zur Befestigung dieses ersten Teils des Werkzeugs an der Struktur des Flugzeugs umfasst.

4. Tragbares Montagewerkzeug nach einem der Ansprüche 2 oder 3, wobei der zweite Teil des Werkzeugs Drucksensoren zum Erfassen von während des Montagevorgangs an der Außenhaut auftretenden Verformungen oder Spannungen umfasst.

5. Tragbares Montagewerkzeug nach einem der Ansprüche 2 bis 4, wobei das tragbare Montagewerkzeug Profilometer zum Überprüfen der richtigen Positionierung der Außenhaut auf der Trägerstruktur umfasst.

6. Montageverfahren zum Anbringen einer mikroperforierten Außenhaut an einer Vorderkante unter Verwendung des Werkzeugs nach einem der Ansprüche 2 bis 5, das folgende Schritte umfasst:
• Abdecken der mikroperforierten Außenhaut mit einer elektrostatisch geladenen Folie zwecks Luftdichtheit,
• Positionieren der mit der elektrostatisch geladenen Folie bedeckten mikroperforierten Außenhaut auf dem zweiten Teil des Montagewerkzeugs (600) und Halten der Außenhaut an diesem zweiten Teil des Werkzeugs mittels Vakuumsaugern,
• Positionieren des ersten Teils des Montagewerkzeugs (500) auf der Flugzeugstruktur mithilfe von Positionierelementen im Werkzeug in Übereinstimmung mit Referenzmerkmalen in der Flugzeugstruktur,
• Verbinden des ersten und zweiten Teils des Werkzeugs durch das gemeinsame Scharnier (550),
• Drehen des zweiten Teils des Werkzeugs mit der daran befestigten Außenhaut um das Scharnier, bis die Außenhaut auf der Aufnahmestruktur der Vorderkante aufliegt,
• Befestigen der Außenhaut an der Vorderkantenstruktur, und
• Entfernen des ersten und zweiten Teils des Montagewerkzeugs.

## Revendications

1. Une méthode de manipulation d'une peau microperforée destinée à un bord d'attaque d'un aéronef à l'aide d'un gabarit équipé de ventouses, comprenant l'étape consistant à recouvrir la peau microperforée avec un film électrostatique pour assurer l'étanchéité à l'air.

2. Un outil d'installation portatif pour positionner une peau sur un bord d'attaque d'un aéronef, comprenant :
• Une première partie (500), comprenant des éléments de positionnement destinés à être coordonnés avec des repères de positionnement correspondants dans la structure de l'aéronef,
• une seconde partie (600), comprenant des ventouses pour maintenir la peau ainsi que des repères de positionnement pour positionner la peau sur cette seconde partie de l'outil, et
• une charnière commune (550) permettant d'assembler la première et la seconde partie de l'outil, et également de permettre la rotation de la seconde partie autour de la première.

3. L'outil d'installation portatif selon la revendication 2, dans lequel la première partie de l'outil comprend des ventouses pour fixer cette première partie de l'outil sur la structure de l'aéronef.

4. L'outil d'installation portatif selon l'une quelconque des revendications 2 ou 3, dans lequel la seconde partie de l'outil comprend des capteurs de pression pour détecter toute déformation ou contrainte exercée sur la peau pendant le processus d'assemblage.

5. L'outil d'installation portatif selon l'une quelconque des revendications 2 à 4, dans lequel l'outil d'installation portatif comprend des profilomètres pour vérifier le bon positionnement de la peau sur la structure de support.

6. Un procédé d'assemblage pour installer une peau microperforée sur un bord d'attaque à l'aide de l'outil selon l'une quelconque des revendications 2 à 5, comprenant les étapes suivantes :
• recouvrir la peau microperforée avec un film électrostatique pour assurer l'étanchéité à l'air,
• positionner la peau microperforée recouverte du film électrostatique sur la seconde partie de l'outil d'installation (600) et maintenir la peau fixée à cette seconde partie de l'outil au moyen de ventouses,
• positionner la première partie de l'outil d'installation (500) sur la structure de l'aéronef au moyen d'éléments de positionnement de l'outil coordonnés avec des repères dans la structure de l'aéronef,
• assembler la première et la seconde partie de l'outil au moyen de la charnière commune (550),
• faire pivoter la seconde partie de l'outil avec la peau qui y est fixée autour de la charnière jusqu'à ce que la peau repose sur la structure de réception du bord d'attaque,
• fixer la peau à la structure du bord d'attaque, et
• retirer la première et la seconde partie de l'outil d'installation.
